# FASCICULE DE BREVET EUROPEEN

(11) **EP 0 541 873 B1**
(45) Date de publication et mention de la délivrance du brevet: **03.05.1995**
(21) Numéro de dépôt: 91403040.8
(22) Date de dépôt: 13.11.1991
(51) Int. Cl.: G01F 15/075

(54) **Capteur de rotation pour totalisateur de compteur d'eau**
Rotationsdetektor für Wasserdurchflussmesser
Rotation detector for water flow meter

(43) Date de publication de la demande: 19.05.1993
(73) Titulaire: SAPPEL Société Anonyme française, 68304 Saint-Louis (FR)
(72) Inventeur: Brinster, Daniel, F-75116 Paris (FR); Perrin, Eric, F-75116 Paris (FR)
(74) Mandataire: Ballot, Paul Denis Jacques

(56) Documents cités:
- FR-A- 2 593 290
- GB-A- 1 363 699
- GB-A- 2 020 817

## Description

La présente invention concerne un capteur de rotation pour totalisateur de compteur d'eau, du genre comprenant, d'une part, dans la partie hydraulique du compteur, un arbre qui porte une roue volumétrique entraînée par l'eau traversant le compteur et dont il s'agit de compter les révolutions, et au moins un aimant entraîné en rotation par cet arbre, et, d'autre part, à l'extérieur de la partie hydraulique du compteur, deux interrupteurs à lames souples montés en regard du trajet de l'aimant de la partie hydraulique et reliés à un circuit électrique qui décompte leurs changements d'état pour fournir au totalisateur des impulsions de comptage, ce dernier indiquant le nombre de révolutions de la roue volumétrique ou, plus exactement, le volume d'eau qui a traversé le compteur et qui est directement proportionnel à ce nombre de révolutions.

On connaît un document GB-A-2020817 qui décrit un compteur d'eau comportant plusieurs résistances magnétiques destinées à produire des signaux de comptage.

On sait qu'un interrupteur à lames souples comprend deux lames métalliques dont les extrémités viennent en contact entre elles lorsqu'elles sont soumises à un champ magnétique approprié, ce qui ferme le circuit dans lequel l'interrupteur est monté. Du fait de l'élasticité des lames, cet interrupteur s'ouvre à nouveau lorsque le champ magnétique disparaît.

On comprend dès lors que si un tel interrupteur est monté dans la partie "sèche" d'un compteur d'eau, c'est-à-dire dans sa partie située à l'extérieur de sa partie hydraulique, et s'il est disposé en face de la trajectoire d'un aimant solidaire de l'arbre du compteur, mais excentré par rapport à celui-ci, l'aimant passe en regard de l'interrupteur une fois par révolution de l'arbre et le ferme pendant un court instant.

Il suffit alors de décompter le nombre de fermetures de l'interrupteur pour en déduire le nombre de révolutions de l'arbre, et donc le volume d'eau qui a traversé le compteur. Bien entendu, c'est généralement ce volume qui est directement affiché. Des totalisateurs électroniques bien connus des spécialistes sont aptes à réaliser de telles opérations, et ils ne seront pas décrits ici.

On a ensuite perfectionné les capteurs décrits plus haut en leur adjoignant un second interrupteur à lames souples également situé sur le trajet circulaire du champ magnétique, mais décalé angulairement de 90° par rapport au premier, ce qui permet de préciser en outre le sens de rotation de l'arbre. Il est clair en effet que, selon le sens de rotation, la fermeture du second interrupteur suivra celle du premier d'un intervalle angulaire de 90° ou de 270°. Il en résulte, entre ces deux instants de fermeture, un intervalle dans le temps supérieur ou inférieur au suivant, et il est facile pour un spécialiste en la matière de concevoir un circuit logique permetant de comparer ces intervalles de temps, et d'en déduire le sens de rotation. De tels perfectionnements de capteurs sont décrits dans le document FR-A1-2593290.

D'autres capteurs à deux interrupteurs appliqués aux compteurs de fluide sont décrits dans le document GB-A-1363699.

Ces capteurs connus présentent toutefois un certain nombre d'inconvénients, dont le plus important est lié à la technologie des interrupteurs à lames souples, les lames de ceux-ci subissant en effet des rebonds dus à leur élasticité qui peuvent perturber les mesures, en particulier lorsque la vitesse de rotation de l'arbre du compteur est élevée. D'autres perturbations peuvent résulter de l'imprécision dimensionnelle et de la dérive dans le temps des interrupteurs à lames souples.

Le but de la présente invention est de pallier les difficultés exposées ci-avant et de proposer un capteur de rotation qui fournisse à moindres frais des mesures précises, exemptes de perturbations et parfaitement stables dans le temps.

Selon l'invention, ces buts, ainsi que d'autres qui apparaîtront par la suite, comme celui de fournir un capteur dont le coût soit suffisamment faible pour rester compatible avec le prix de vente d'un compteur d'eau à usage domestique, sont atteints grâce à un capteur de rotation à deux interrupteurs à lames souples du genre spécifié plus haut qui est caractérisé par le fait que chacune de ses impulsions de comptage est déclenchée par la fermeture du premier des deux interrupteurs à lames souples spécifiés ci-avant et arrêtée par la fermeture du second, et au fait que la fermeture du second interrupteur se produit sensiblement au milieu de la durée de fermeture du premier.

On comprend que la première de ces dispositions élimine l'effet perturbateur des rebonds des interrupteurs à lames souples sur le comptage, puisque les fronts montant et descendant de chaque impulsion de comptage sont engendrés tous deux par la fermeture de l'interrupteur correspondant, et donc avant l'apparition de ses rebonds qui ne sauraient ainsi exercer une influence quelconque sur l'impulsion.

D'autre part, le fait que la fermeture du second interrupteur à lames souples ait lieu sensiblement au milieu de l'intervalle de temps pendant lequel le premier reste fermé évite que les écarts et les déviations dûs à à l'imprécision dimensionnelle ou à la dérive des interrupteurs à lames souples ne puisse décaler les signaux produits par ces derniers au point de perturber les impulsions de comptage.

Dans une forme de réalisation particulièrement avantageuse du capteur selon l'invention, la seconde condition spécifiée plus haut pour les interrupteurs à lames souples, à savoir le fait que le second doit se fermer au milieu du temps de fermeture du premier, est satisfaite de manière très simple si le second interrupteur a lames souples est distant angulairement du premier, autour de l'axe de l'aimant qui est solidaire de l'arbre tournant noyé dans la partie hydraulique du compteur, et dans le sens de rotation de cet arbre, d'un angle qui est compris entre 185° et 210°, et de préférence entre 190 et 195°.

Il s'est en effet avéré, de manière surprenante, que cette disposition permettait de produire automatiquement la fermeture du second interrupteur à lames souples au moment voulu par rapport à la durée de la fermeture du premier. La valeur optimale de l'angle entre ces deux interrupteurs à l'intérieur des gammes spécifiées ci-avant dépend notamment de la puissance de l'aimant utilisé, lequel est de préférence torique pour des raisons de symétrie évidentes, de son éloignement des interrupteurs, de la concentration de ses pôles et du nombre de ceux-ci. De toute façon, elle peut être facilement déterminée par un spécialiste moyennant quelques essais simples.

Cette disposition respective des deux interrupteurs à lames souples est très facile à obtenir dans la pratique si, selon une forme de réalisation avantageuse de l'invention, l'aimant solidaire de l'arbre dont il s'agit de compter les révolutions est porté par celui-ci à son extrémité et si les interrupteurs à lames souples sont disposés en face de lui, au-delà de l'extrémité de l'arbre, une plaque étanche étant interposée entre celle-ci et les interrupteurs. Cette disposition présente l'avantage supplémentaire que l'on obtient un gain de place appréciable par rapport à la solution classique où les interrupteurs à lames souples sont répartis sur la périphérie de l'extrémité de l'arbre qui porte le ou les aimants. En outre, la plaque disposée entre ces derniers et les interrupteurs à lames souples permet d'assurer parfaitement l'étanchéité entre la partie hydraulique et la partie "sèche" du compteur.

Les conditions qui sont imposées par l'invention aux interrupteurs à lames souples du capteur ne font nullement obstacle à ce que l'on puisse détecter celui de ces interrupteurs qui se ferme le premier et en déduire le sens de rotation de l'arbre qui porte la roue volumétrique et l'aimant ou les aimants du compteur.

En outre, le circuit électronique qui produit les impulsions de comptage du capteur selon l'invention peut alors être muni avantageusement de moyens pour changer le signe de celles-ci en fonction du sens de rotation de l'arbre en question. Si le totalisateur du dispositif est susceptible de fonctionner en comptage et en décomptage, c'est-a-dire d'additionner ou, respectivement, de retrancher le nombre des impulsions selon leur signe, il devient possible de compter les volumes d'eau en plus ou en moins selon leur sens de traversée du compteur.

La description qui va suivre, et qui ne présente aucun caractère limitatif, permettra de bien comprendre comment la présente invention peut être mise en pratique. Elle doit être lue en regard des dessins annexés, parmi lesquels:
- La figure 1 représente une vue de dessus schématique du capteur de rotation selon l'invention ;
- La figure 2 montre une vue en coupe prise selon la ligne II-II de la figure 1 ; et :
- La figure 3 est un diagramme indiquant, en fonction du temps, les divers signaux émis par le dispositif des figures 1 et 2.

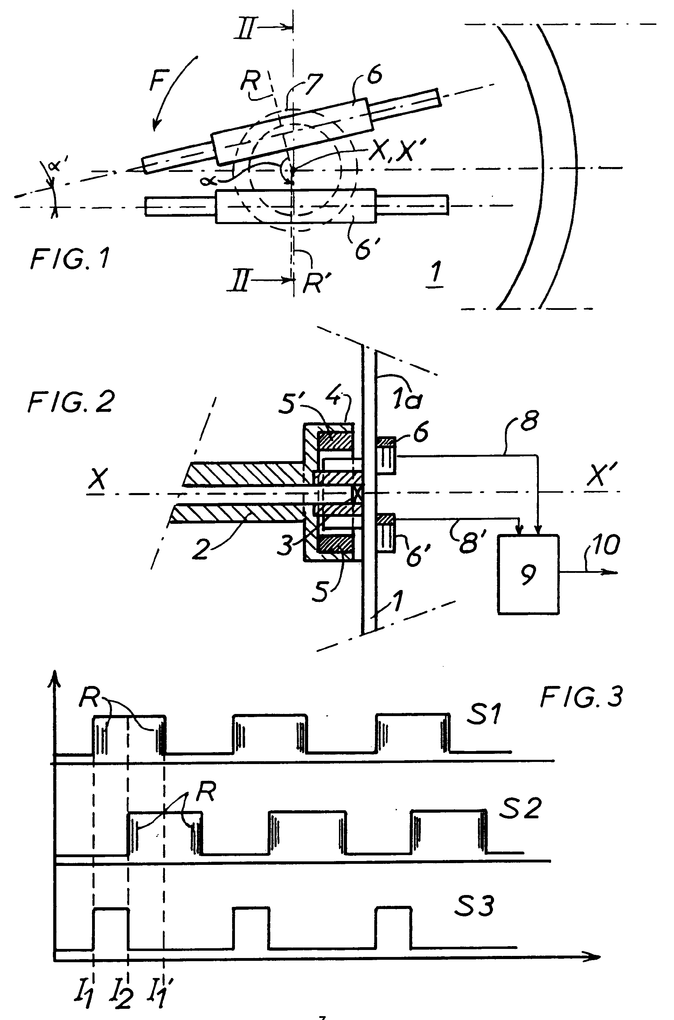

La partie hydraulique d'un compteur d'eau non représenté se trouve à gauche de la vue en coupe de la figure 2, et elle est délimitée à droite par une cloison étanche 1. Elle comporte un arbre 2 dont l'axe X-X′ est perpendiculaire à la paroi 1 et dont la vitesse de rotation est proportionnelle au débit de l'eau traversant le compteur. Il suffit donc de totaliser le nombre de ses rotations pour en déduire simplement le volume total d'eau ayant traversé le compteur.

A cette fin, le bout de l'arbre 2 tourne dans un palier 3 solidaire de la paroi 1, et il porte une couronne d'extrémité 4 à l'intérieur de laquelle est monté un aimant permanent torique présentant deux pôles diamétralement opposés 5 et 5′. Le bord libre de la couronne 4 et son aimant sont séparés de la paroi 1 par un entrefer de très faible épaisseur.

Sur la face extérieure la de la paroi 1, donc du côté "sec" de l'installation, sont montés deux interrupteurs à lames souples 6 et 6′ dont la partie active est située au droit du trajet des pôles d'aimant 5 et 5′, et donc sur la projection de ce trajet sur le plan de la face extérieure la de la cloison étanche. Cette projection est indiquée par une couronne en traits interrompus 7 sur la figure 1.

En outre, ces interrupteurs à lames souples 6 et 6′ sont placés sur la couronne 7 de façon a être actionnés par l'aimant 5, 5′ avec un léger déphasage, ce dernier étant tel que le second interrupteur 6′ soit activé, donc fermé, lorsque le premier, 6, est dans la zone de champ maximal.

Comme on le voit sur la figure 1, cette condition est réalisée grâce au fait que la partie active du second interrupteur 6′ est décalée par rapport a celle du premier, 6, dans le sens de rotation de l'arbre 2 indiqué par la flèche F, d'un angle α qui est égal à 168° dans l'exemple de réalisation décrit.

En d'autres termes, si l'on appelle R et R′ les rayons menés de l'axe X-X′ de l'arbre 2 aux interrupteurs 6 et 6′, l'angle (R, R′) orienté dans le sens de la flèche F est égal à 168° dans le cas du présent exemple. Il en résulte, bien entendu, que l'angle α′ formé par les axes longitudinaux des deux interrupteurs 6 et 6′ est, pour sa part, égal à 180° - 168° = 12°.

Les signaux qui proviennent des interrupteurs 6 et 6′, et qui sont donc des signaux binaires correspondant à l'ouverture ou a la fermeture de ces derniers, sont envoyés par des conducteurs respectifs 8 et 8′ à un circuit électronique 9. Ils sont représentés sur la figure 3 en S1 et en S2, respectivement, et on constate que la fermeture de l'interrupteur 6′ se produit bien à un instant I₂ qui est situé au milieu de la phase de fermeture I,-I′₁ de l'interrupteur 6, comme on le souhaitait.

En fait, la valeur qu'il convient de donner à l'angle α pour atteindre ce but dépend notamment des caractéristiques de l'aimant 5, 5′, et elle peut être déterminée dans chaque cas au moyen de quelques essais simples, la valeur de 168° fournie plus haut correspondant simplement à une forme de réalisation particulière donnée à titre d'exemple.

Comme on l'a déjà indiqué, le but visé par cette disposition est de rendre optimal l'instant I₂ de fermeture de l'interrupteur 6′, de telle sorte que les écarts et les déviations dûs à l'imprécision des dimensions ou à la dérive des interrupteurs à lames souples 6 et 6′ et de l'aimant 5, 5′ ne puissent pas décaler le signal S2 par rapport au signal S1 au point que l'instant I₂ intervienne en dehors de l'intervalle I₁-I′₁.

Cela étant, le circuit électronique 9 fournit ensuite, à partir des signaux S1 et S2 ainsi engendrés par les interrupteurs à lames souples 6 et 6′, des impulsions de comptage qui sont représentées en S3 sur la figure 3 et qui débutent à chaque activation de l'interrupteur 6 pour finir à l'activation immédiatement consécutive de l'interrupteur 6′. Des circuits logiques permettant d'arriver à ce résultat sont bien connus des spécialistes en la matière, et ils ne seront donc pas décrits ici de manière détaillée.

Quoiqu'il en soit, il résulte du mode de génération des impulsions de comptage que les rebonds parasites qui sont figurés en R sur la figure 3, et qui sont inévitables, car liés à la technologie des interrupteurs à lames souples, n'agissent pas sur le comptage, parce que les impulsions de comptage sont déclenchées par des fronts de signaux montants qui interviennent nécessairement avant les rebonds de fermeture des interrupteurs, et qu'elles sont arrêtées avant les rebonds d'ouverture, comme on le voit sur la figure.

Les impulsions de comptage fournies par le circuit électronique 9 sont envoyées par un conducteur 10 à un totalisateur d'impulsions non représenté où elles sont exploitées de manière connue. On obtient ainsi le nombre total de révolutions de l'arbre 1 depuis le début des mesures ou depuis une remise au zéro, et on a déjà indiqué que ce nombre de révolutions est directement lié au volume d'eau ayant traversé le compteur qui est la valeur cherchée.

Lorsque l'arbre 1 tourne dans le sens inverse de la flèche F, on obtient des impulsions de décomptage qui débutent lors de la fermeture du second interrupteur 6′ et qui s'achèvent lors de la fermeture du premier interrupteur 6. Là aussi, les rebonds parasites n'agissent pas sur ces impulsions.

C'est le circuit électronique 9 qui permet de déterminer le sens de rotation de l'arbre 1 en détectant si ce sont les signaux du premier interrupteur 6 qui arrivent en premier, ou ceux du second, 6′. Cette détection est possible grâce au fait que le décalage angulaire entre l'interrupteur 6 et l'interrupteur 6′ est de 168° pour le sens de rotation indiqué par la flèche F de la figure 1 et de 192° pour le sens inverse, et que ceci correspond à un décalage dans le temps qu'il est facile de déterminer. Là aussi, les spécialistes en la matière savent comment réaliser un circit logique qui permette de réaliser cette détection, de sorte que cela ne sera pas décrit ici de manière détaillée.

L'inversion du sens de rotation de l'arbre 1 se traduit par un changement de signe des impulsions fournies par le circuit électronique 9. Le totalisateur additionne les impulsions positives et retranche les impulsions négatives, de sorte que l'on peut décompter les volumes d'eau en plus ou en moins, selon qu'ils traversent le compteur dans un sens ou dans l'autre. Bien entendu, il est possible d'afficher séparément les quantités d'eau qui traversent le compteur dans un sens donné et celles qui le traversent dans l'autre sens.

On notera encore que le fait de disposer l'aimant 5, 5′ en bout d'arbre et de disposer les interrupteurs à lame souples 6 et 6′ dans son prolongement constitue un gain de place appréciable par rapport à une disposition périphérique, et que la plaque 1 assure parfaitement l'étanchéité entre l'aimant placé sur une turbine immergée de compteur à eau et les interrupteurs à lames souples 6 et 6′ placés dans une zone sèche.

## Revendications

1. Capteur de rotation pour totalisateur de compteur d'eau comprenant, d'une part, dans la partie hydraulique du compteur, un arbre qui porte une roue volumétrique entraînée par l'eau traversant le compteur et dont il s'agit de compter les révolutions, et au moins un aimant entraîné en rotation par ledit arbre, et, d'autre part, à l'extérieur de cette partie hydraulique, un premier et un second interrupteur (6, 6′) à lame souple montés en regard du trajet dudit aimant et reliés à un circuit électronique (9) qui décompte leurs changements d'état pour fournir au totalisateur des impulsions de comptage, la disposition respective des premier et second interrupteurs (6, 6′) étant déterminée de manière à ce que la fermeture du second interrupteur (6′) arrêtant chaque impulsion de comptage se produise sensiblement au milieu de la durée de fermeture du premier interrupteur (6) ayant déclenché ladite impulsion.

2. Capteur de rotation selon la revendication 1, caractérisé par le fait que ledit second interrupteur à lames souples (6′) est distant angulairement dudit premier interrupteur à lames souples (6), autour de l'axe dudit aimant (5, 5′) et dans le sens de rotation de celui-ci, d'un angle (α) qui est compris entre 185° et 210°.

3. Capteur de rotation selon la revendication 2, caractérisé par le fait que ledit angle (α) est compris entre 190° et 195°.

4. Capteur de rotation selon l'une quelconque des revendications 1 à 3, caractérisé par le fait que ledit aimant (5, 5′) est un aimant torique.

5. Capteur de rotation selon l'une quelconque des revendications 1 à 4, caractérisé par le fait que ledit aimant (5, 5′) est porté par l'extrémité dudit arbre (2), et que lesdits interrupteurs à lames souples (6, 6′) sont disposés en face de lui, au-delà de l'extrémité dudit arbre (2), une plaque étanche (1) étant interposée entre celle-ci et lesdits interrupteurs (6, 6′).

6. Capteur de rotation selon l'une quelconque des revendications 1 à 5, caractérisé par le fait que ledit circuit électronique (9) comprend des moyens pour détecter celui desdits interrupteurs (6, 6′) qui se ferme le premier.

7. Capteur de rotation selon la revendication 6, caractérisé par le fait que ledit totalisateur décompte en plus ou en moins, selon leur signe, les impulsions de comptage fournies par ledit circuit électronique (9).

## Patentansprüche

1. Rotationsaufnehmer für ein Addierwerk eines Wasserzählers mit einerseits einer Welle in dem hydraulischen Teil des Zählers, die ein durch das den Zähler durchströmende Wasser angetriebenes Volumenrad, das zum Zählen der Umdrehungen dient, sowie zumindest einen durch die Welle in Drehung versetzten Magneten trägt, und andererseits einem ersten und einem zweiten Schalter (6, 6′) mit biegsamem Messer, die der Bahn des Magneten gegenüberliegend angeordnet und mit einer elektronischen Schaltung (9) verbunden sind, die ihre Zustandswechsel abzählt, um dem Addierwerk Zählimpulse zuzuführen, wobei die Anordnung des ersten bzw. des zweiten Schalters (6, 6′) derart festgelegt ist, daß das jeden Zählimpuls beendende Schließen des zweiten Schalters (6′) etwa in der Mitte der Schließdauer des ersten Schalters (6), der diesen Impuls ausgelöst hat, eintritt.

2. Rotationsaufnehmer nach Anspruch 1, dadurch gekennzeichnet, daß der zweite Schalter (6′) mit biegsamen Messern in der Nähe der Achse des Magneten (5, 5′) und in der Rotationsrichtung desselben winklig unter einem zwischen 185° und 210° liegenden Winkel (α) von dem ersten Schalter (6) mit biegsamen Messern beabstandet ist.

3. Rotationsaufnehmer nach Anspruch 2, dadurch gekennzeichnet, daß der Winkel (α) zwischen 190° und 195° liegt.

4. Rotationsaufnehmer nach einem der Ansprüche 1 bis 3, dadurch gekennzeichnet, daß der Magnet (5, 5′) ein torischer Magnet ist.

5. Rotationsaufnehmer nach einem der Ansprüche 1 bis 4, dadurch gekennzeichnet, daß der Magnet (5, 5′) durch das Ende der Welle (2) getragen wird, und daß die Schalter (6, 6′) mit biegsamen Messern jenseits des Endes der Welle (2) ihm gegenüber angeordnet sind, wobei eine undurchlässige Platte zwischen dieser und den Schaltern (6, 6′) angeordnet ist.

6. Rotationsaufnehmer nach einem der Ansprüche 1 bis 5, dadurch gekennzeichnet, daß die elektronische Schaltung (9) Mittel zum Erfassen desjenigen der Schalter (6, 6′) umfaßt, der sich zuerst schließt.

7. Rotationsaufnehmer nach Anspruch 6, dadurch gekennzeichnet, daß das Addierwerk die durch die elektronische Schaltung (9) zugeführten Zählimpulse entsprechend ihrem Vorzeichen hinzuzählt oder abzieht.

## Claims

1. Rotation sensor for the counter on a water meter comprising on the one hand, in the hydraulic part of the meter, a shaft which carries a volumetric wheel driven by the water passing through the meter and whose revolutions are to be counted, and at least one magnet rotated by the said shaft, and on the other hand, outside this hydraulic part, first and second switches (6, 6′) with a flexible blade, mounted opposite the path of the said magnet and connected to an electronic circuit (9) which counts their changes of state in order to supply counting pulses to the counter, the respective arrangement of the first and second switches (6, 6′) being determined so that the closure of the second switch (6′) stopping each counting pulse occurs substantially at the middle of the period of closure of the first switch (6) which has triggered the said pulse.

2. Rotation sensor according to Claim 1, characterised by the fact that the second flexible-blade switch (6′) is angularly distant from the said first flexible-blade switch (6), around the axis of the said magnet (5, 5′) and in the direction of rotation of the latter, by an angle (α) which is between 185° and 210°.

3. Rotation sensor according to Claim 2, characterised by the fact that the said angle (α) is between 190° and 195°.

4. Rotation sensor according to any one of Claims 1 to 3, characterised by the fact that the said magnet (5, 5′) is a ring magnet.

5. Rotation sensor according to any one of Claims 1 to 4, characterised by the fact that the said magnet (5, 5′) is carried by the end of the said shaft (2), and that the said flexible-blade switches (6, 6′) are disposed facing it, beyond the end of the said shaft (2), a watertight plate (1) being interposed between the said end and the said switches (6, 6′).

6. Rotation sensor according to any one of Claims 1 to 5, characterised by the fact that the said electronic circuit (9) comprises means for detecting which of the said switches (6, 6′) closes first.

7. Rotation sensor according to Claim 6, characterised by the fact that the said counter adds or subtracts, according to their sign, the counting pules supplied by the said electronic circuit (9).
